# EUROPÄISCHE PATENTSCHRIFT

(11) **EP 1 497 371 B1**
(45) Veröffentlichungstag und Bekanntmachung des Hinweises auf die Patenterteilung: **17.08.2005**
(21) Anmeldenummer: 03722412.8
(22) Anmeldetag: 08.04.2003
(51) Int. Cl.: C08L 69/00

(54) **POLYCARBONAT-STYROLCOPOLYMER-BLENDS MIT VERBESSERTEN EIGENSCHAFTEN**
POLYCARBONATE STYRENE COPOLYMER BLENDS WITH IMPROVED PROPERTIES
MELANGES A PROPRIETES AMELIOREES DE COPOLYMERES DE STYRENE ET DE POLYCARBONATE

(30) Priorität: 11.04.2002 DE 10216071
(43) Veröffentlichungstag der Anmeldung: 19.01.2005
(73) Patentinhaber: BASF AKTIENGESELLSCHAFT, 67056 Ludwigshafen (DE)
(72) Erfinder: WEBER, Martin, 67487 Maikammer (DE); HOPFENSPIRGER, Xaver, 67454 Hassloch (DE); JAKOBI, Reinhard, 67133 Maxdorf (DE); HECKMANN, Walter, 69469 Weinheim (DE)
(86) Internationale Anmeldenummer: PCT/EP2003/003612
(87) Internationale Veröffentlichungsnummer: WO 2003/085047

(56) Entgegenhaltungen:
- EP-A- 0 522 397
- WO-A-01/42361
- WO-A-99/28386
- MARTIN P ET AL: "Competitive reactions during compatibilization of blends of polybutyleneterephthalate with epoxide-containing rubber" POLYMER, ELSEVIER SCIENCE PUBLISHERS B.V, GB, Bd. 42, Nr. 6, März 2001 (2001-03), Seiten 2463-2478, XP004223272 ISSN: 0032-3861

## Beschreibung

Die Erfindung betrifft thermoplastische Formmassen, enthaltend die Komponenten A, B, C und D sowie gegebenenfalls E, F, G und H, deren Summe 100 Gew.-% ergibt,
A) 1 bis 97,5 Gew.-% mindestens eines aromatischen Polycarbonats A,
B) 1 bis 97,5 Gew.-% mindestens eines Pfropfpolymerisats B aus
   b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,
   b2) 20 bis 60 Gew.-% einer Pfropfauflage B2 aus
   b21) 60 bis 95 Gew.-% Styrol oder substituierten Styrolen B21 der allgemeinen Formel I 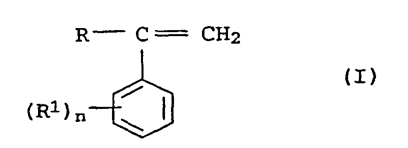 worin R einen C₁₋₈-Alkylrest oder Wasserstoff und R¹ einen C₁₋₈-Alkylrest bedeutet und n den Wert 1, 2 oder 3 hat, oder deren Mischungen und
   b22) 5 bis 40 Gew.-% mindestens eines ungesättigten Nitrils B22,
C) 1 bis 97,5 Gew.-% mindestens eines thermoplastischen Copolymerisats C aus,
   c1) 60 bis 85 Gew.-% Styrol oder substituierten Styrolen C1 der allgemeinen Formel I oder deren Mischungen und
   c2) 15 bis 40 Gew.-% mindestens eines ungesättigten Nitrils C2,
D) 0,5 bis 50 Gew.-% mindestens eines Copolymerisats D, erhältlich durch Umsetzung von
   d1) 5 bis 95 Gew.-% mindestens eines thermoplastischen Methacrylat-Polymeren D1 enthaltend mindestens eine Art funktioneller Gruppen, ausgewählt aus Epoxy, Carboxyl, Hydroxyl, Anhydrid und Oxazolin, mit
   d2) 5 bis 95 Gew.-% mindestens eines thermoplastischen Polyesters D2.
E) 0 bis 40 Gew.-% mindestens eines Füllstoffs E,
F) 0 bis 2 Gew.-% mindestens einer organischen Säure F,
G) 0 bis 25 Gew.-% mindestens einer halogenfreien Phosphorverbindung G,
H) 0 bis 45 Gew.-% weiterer Zusatzstoffe H,

Weiterhin betrifft die Erfindung ein Verfahren zur Herstellung der Formmassen, die Verwendung der Formmassen zur Herstellung von Formkörpern, Fasern und Folien, sowie diese Formkörper, Fasern und Folien. Schließlich betrifft die Erfindung die Verwendung der vorgenannten Copolymerisate D als Verträglichkeitsvermittler in Formmassen enthaltend Polycarbonate, Pfropfpolymerisate und Styrolcopolymerisate, und sie betrifft Copolymerisate D gemäss Anspruch 15.

Polymerblends aus Polycarbonat und Styrolpolymeren, wie beispielsweise ABS (Acrylnitril-Butadien-Styrol-Polymerisate) oder ASA (Acrylnitril-Styrol-Acrylat-Polymerisate) zeichnen sich durch hervorragende mechanische Eigenschaften aus; Einzelheiten findet der Fachmann z.B. in L. Bottenbruch (Hg.), Kunststoff-Handbuch, Band 3/2 "Technische Polymer-Blends", Hanser-Verlag, München 1993. Daher finden diese Formmassen in den verschiedensten Bereichen Verwendung, wie beispielsweise im Automobilbau, im Bausektor, für Büromaschinen, sowie in elektrischen Geräten und Haushaltsgeräten.

Zur Herstellung großflächiger Formteile ist ein geringer thermischer Ausdehnungskoeffizient (CTE) wünschenswert. Eine Senkung des thermischen Ausdehnungskoeffizienten ist durch Zusatz von Füll- oder Verstärkungsstoffen zu thermoplastischen Formmassen möglich.

Insbesondere für große Formteile wie z.B. Karosserieteile, ist eine hohe Steifigkeit und eine gute Zähigkeit erforderlich.

Polymerblends können durch Zusatz von - insbesondere halogenfreien - Flammschutzmitteln flammwidrig ausgerüstet werden, so daß die Brandprüfung nach dem Standard UL-94 der Underwriters' Laboratories Inc. (Melville, Long Island, New York 11746, USA) in Bezug auf die Brandzeiten erfüllt wird. Besonders geeignete Flammschutzmittel sind phosphororganische Verbindungen, wie beispielsweise Phosphorester oder Phosphinoxide. Mit diesen Flammschuztmitteln ausgerüstete Formmassen sind aus vielen Patentanmeldungen, wie z.B. den EP-A-Schriften 522 397, 103 230, 174 493, 206 058, 363 608 und 558 266 bekannt.

Die Morphologie von Polycarbonat-Styrolcopolymer-Blends wird sehr stark von den Verarbeitungsbedingungen bestimmt, beispielsweise den Schmelzetemperaturen und den Schergeschwindigkeiten bei der Spritzgußverarbeitung. Insbesondere bei großen Formteilen kann dies zu anisotropen Eigenschaften, z.B. anisotropen mechanischen Eigenschaften, führen.

Dieser unerwünschte Effekt wird noch verstärkt, falls die Blends Füll- oder Verstärkungsstoffe wie z.B. Glasfasern enthalten.

Aus D.W. Jin et al., J. Appl. Polym. Sci. 69,533 (1998) ist bekannt, daß durch Zusatz von Polymethylmethacrylat (PMMA) die Verträglichkeit der Blendkomponenten in Polycarbonat-ABS-Blends verbessert werden kann.

Die DE-A 199 59 420 beschreibt Polycarbonat-Styrolcopolymer-Blends, die ein Umsetzungsprodukt aus reaktiven Styrolpolymeren - d.h. Styrolcopolymeren enthaltend Epoxy-, Hydroxy-, Carboxyl- oder Oxazolinmonomere - und Polyestern enthalten. Manche Anwendungen erfordern eine weitere Verbesserung der Anisotropie-Eigenschaften dieser Blends; insbesondere bei großen Formteilen wäre eine Verminderung der Delaminationsneigung (Neigung zum Abplatzen von Polymermaterial, vor allem bei großen Formteilen) wünschenswert. Delamination macht das Formteil unbrauchbar.

Die EP-A 1 153 981 offenbart Blends aus Polycarbonat und Vinylcopolymeren wie Polystyrol, SAN (Styrol-Acrylnitril-Copolymer) oder ABS. Die Blends enthalten Verträglichkeitsvermittler, erhältlich aus Vinylmonomeren wie Styrol, Acrylnitril, Acrylaten oder Olefinen, und Hydroxylgruppen-haltigen Monomeren wie etwa Hydroxystyrolen. Außerdem enthalten die Blends Umesterungskatalysatoren. Aus J. Deveaux et al., J. Polym. Sci., Polym. Phys. Ed., 20, 1901 (1982) ist jedoch bekannt, daß Hydroxylgruppen-haltige Produkte in der Schmelze - also bei der Herstellung der Blends aus den Blendkomponenten - mit Polycarbonaten reagieren, wobei diese Reaktion schlecht kontrollierbar ist.

Es bestand die Aufgabe, den geschilderten Nachteilen abzuhelfen. Insbesondere bestand die Aufgabe, Polycarbonat-Styrolcopolymer-Blends bereitzustellen, die eine hohe Steifigkeit und eine gute Zähigkeit aufweisen.

Außerdem bestand die Aufgabe, den Einfluß der Verarbeitungsbedingungen auf die Formteileigenschaften zu vermindern, und die Anisotropie insbesondere der mechanischen Eigenschaften zu verringern. Dies sollte auch für füllstoffhaltige Formmassen gelten.

Schließlich sollte die Delaminationsneigung der aus den Formmassen hergestellten Formteile vermindert sein.

Alle vorgenannten Verbesserungen sollten zugleich erzielt werden, d.h. es sollte nicht ein Merkmal auf Kosten eines anderen erfüllt werden.

Demgemäß wurden die eingangs definierten thermoplastischen Formmassen, deren Herstellungsverfahren und Verwendung zur Herstellung von Formkörpern, Fasern und Folien, sowie diese Formkörper, Fasern und Folien gefunden. Außerdem wurde die Verwendung der vorgenannten Copolymerisate D als Verträglichkeitsvermittler in Formmassen enthaltend Polycarbonate, Pfropfpolymerisate und Styrolcopolymerisate gefunden sowie die Copolymerisate D als solche.

Bevorzugte Ausführungsformen sind den Unteransprüchen zu entnehmen.

Von den Formmassen des Standes der Technik unterscheiden sich die erfindungsgemäßen Formmassen durch die chemische Natur des Verträglichkeitsvermittlers, hier Komponente D. Von der DE-A 199 59 420 unterscheiden sie sich dadurch, daß der Vermittler aus reaktivem Methacrylat-Polymer (statt reaktivem StyrolCopolymer) erhältlich ist. Nachstehend werden die bevorzugten Komponenten A bis H erläutert.

### Komponente A

Die Komponente A ist in den erfindungsgemäßen Formmassen in einer Menge von 1 bis 97,5, vorzugsweise 10 bis 94, insbesondere 20 bis 92,5 Gew.-% enthalten.

Bevorzugt werden als Komponente A halogenfreie Polycarbonate eingesetzt. Geeignete halogenfreie Polycarbonate sind beispielsweise solche auf Basis von Diphenolen der allgemeinen Formel II 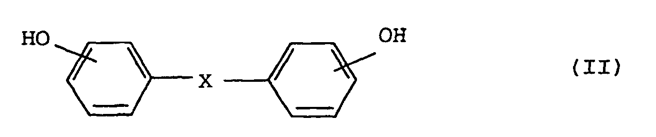 worin X eine Einfachbindung, eine C₁- bis C₃-Alkylen-, eine C₂-bis C₃-Alkyliden-, eine C₃- bis C₆- Cycloalkylidengruppe, sowie -S- oder -SO₂- bedeutet.

Bevorzugte Diphenole der Formel II sind beispielsweise Hydrochinon, Resorcin, 4,4'-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolycarbonat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere 1,20 bis 1,40, aufweisen. Dies entspricht mittleren Molekulargewichten M_{w} (Gewichtsmittelwert) von 10 000 bis 200 000, vorzugsweise von 20 000 bis 80 000, bzw. Viskositätszahlen von 20 bis 100, insbesondere 40 bis 80 ml/g, gemessen nach DIN 53727 an einer 0,5 gew.-%igen Lösung in Methylenchlorid bei 23°C.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei die jeweils einzustellende Viskositätszahl (und damit das Molekulargewicht) in bekannter Weise durch eine entsprechende Menge an bekannten Kettenabbrechern erzielt wird.

Bezüglich polydiorganosiloxanhaltigen Polycarbonaten siehe beispielsweise DE-A 33 34 782.

Geeignete Kettenabbrecher sind beispielsweise Phenol, p-t-Butylphenol aber auch langkettige Alkylphenole wie 4-(1,3-Tetramethylbutylbutyl)-phenol, gemäß DE-A 28 42 005 oder Monoalkylphenole oder Dialkylphenole mit insgesamt 8 bis 20 C-Atomen in den Alkylsubstituenten gemäß DE-A 35 06 472, wie p-Nonylphenol, 3.5-dit-Butylphenol, p-t-Octylphenol, p-Dodecylphenol, 2-(3,5-dimethylheptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

### Komponente B

Die Komponente B ist in den erfindungsgemäßen Formmassen in einer Menge von 1 bis 97,5, vorzugsweise 1,5 bis 50, insbesondere 2 bis 45 Gew.-% enthalten. Die Komponente B ist vorzugsweise halogenfrei.

Die Pfropfpolymerisate B sind aufgebaut aus
b1) 40 bis 80 Gew.-%, vorzugsweise 50 bis 70 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,
b2) 20 bis 60 Gew.-%, vorzugsweise 30 bis 50 Gew.-% einer Pfropfauflage B2 aus
b21) 60 bis 95 Gew.-%, bevorzugt 70 bis 85 Gew.-% Styrol oder substituierten Styrolen B21 der allgemeinen Formel I 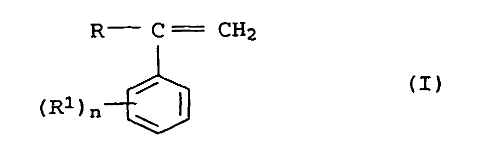 worin R ein C₁- bis C₈ Alkylrest, bevorzugt Methyl oder Ethyl oder Wasserstoff bedeutet und R¹ einen C₁- bis C₈- Alkylrest, bevorzugt Methyl oder Ethyl, darstellt und n den Wert 1, 2 oder 3 hat, oder deren Mischungen,
b22) 5 bis 40 Gew.-%, vorzugsweise 15 bis 30 Gew.-% mindestens eines ungesättigten Nitrils B22, bevorzugt Acrylnitril oder Methacrylnitril oder deren Mischungen, und
b23) 0 bis 10 Gew.-% mindestens eines weiteren, radikalisch polymerisierbaren Monomeren B23.

Für die Pfropfgrundlage B1 kommen Polymerisate in Betracht, deren Glasübergangstemperatur unterhalb von 0°C, vorzugsweise unterhalb von -10°C, besonders bevorzugt unterhalb von -20°C liegt. Dies sind z.B. Elastomere auf der Basis von C₁- bis C₈-Alkylestern der Acrylsäure, die gegebenenfalls weitere Comonomere enthalten können, auf der Basis von Ethylen/Propylen, auf der Basis von Dienen wie Butadien oder auf der Basis von Siloxanen. Als Pfropfkautschuk ergeben sich dann ASA-, AES-, ABS- bzw. Polysiloxankautschuke.

Es versteht sich, daß zur Herstellung der Pfropfgrundlage B1 auch Mischungen der genannten Monomere C₁₋₈-Alkylacrylate, Ethylen/Propylen, Diene und Siloxane verwendet werden können.

Geeignete C₁₋₈-Alkylacrylate sind insbesondere n-Butylacrylat und 2-Ethylhexylacrylat. Als Diene sind insbesondere Butadien und Isopren geeignet. Geeignete Siloxane sind z.B Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan und Octaphenylcyclotetrasiloxan, siehe die DE-A 197 53 542.

Geeignete Siloxan-Elastomere (meist als Siliconkautschuke bezeichnet) sind vorzugsweise vernetzt. Geeignete vernetzte Siliconkautschuke sind im allgemeinen solche aus Einheiten der allgemeinen Formeln R₂SiO, RSiO_{3/2}, R₃SiO_{1/2} und SiO_{2/4}, wobei R einen einwertigen Rest, und im Fall von R₃SiO_{1/2} ggf. auch OH, darstellt. Die Mengen der einzelnen Siloxaneinheiten sind dabei üblicherweise so bemessen, daß auf 100 Einheiten der Formel R₂SiO 0 bis 10 Mol-Einheiten der Formel RSiO_{3/2}, 0 bis 1,5 Mol-Einheiten R₃SiO_{1/2} und 0 bis 3 Mol-Einheiten SiO_{2/4} vorhanden sind.

R steht dabei im allgemeinen für C₁-C₁₈-Alkyl, vorzugsweise für C₁-C₁₂, besonders bevorzugt für C₁-C₆-Alkyl wie Methyl, Ethyl, n-Propyl, i-Propyl, n-Butyl, i-Butyl, sek-Butyl, tert.-Butyl, Pentyl oder Hexyl, insbesondere Methyl oder Ethyl oder C₆-C₁₀-Aryl wie Phenyl oder Naphthyl, insbesondere Phenyl, oder C₁-C₁₀-Alkoxy und Aryloxy wie Methoxy, Ethoxy oder Phenoxy, vorzugsweise Methoxy, oder radikalisch angreifbare Gruppen wie Vinyl-, Allyl-, Acryl-, Acryloxy-, Methacryl-, Methacryloxyalkyl, Halogen- oder Mercaptogruppen, bevorzugt Vinyl- oder Mercapto-C₁-C₁₀-alkylreste, insbesondere Mercaptopropyl, Vinyl und Methacryloxypropyl.

In einer besonderen Ausführungsform setzt man Siliconkautschuke ein, bei denen mindestens 80 % aller Reste R Methylreste sind. Des weiteren sind Siliconkautschuke bevorzugt, in denen R für Methyl und Ethyl steht.

In einer weiteren Ausführungsform setzt man Siliconkautschuke ein, die die oben genannten radikalisch angreifbaren Gruppen in Mengen im Bereich von 0,01 bis 10, bevorzugt von 0,2 bis 2 Mol-%, bezogen auf alle Reste R, enthalten. Solche Siliconkautschuke sind beispielsweise in der EP-A 260 558 und in der EP-A 492 376 beschrieben.

Des weiteren kann man die in der DE-A 25 39 572 beschriebenen Siliconkautschuke als Harze einsetzen, oder solche, die aus der EP-A 370 347 bekannt sind.

Geeignete Ethylen/Propylen-Elastomere werden aus Ethylen und Propylen hergestellt (EPM-Kautschuk) oder aus Ethylen, Propylen und einem Dien (EPDM-Kautschuk), siehe auch EP-A 163 411, EP-A 244 857). Als EP(D)M-Kautschuke werden bevorzugt solche verwendet, die eine Glastemperatur im Bereich von -60 bis -40°C aufweisen. Die Kautschuke haben nur eine geringe Anzahl von Doppelbindungen, d. h. weniger als 20 Doppelbindungen pro 1000 C-Atome, insbesondere 3 bis 10 Doppelbindungen pro 1000 C-Atome. Beispiele für solche Kautschuke sind aus Ethylen-Propylen bestehende Copolymerisate, sowie Ethylen-Propylen-Terpolymerisate. Letztere werden durch Polymerisation von mindestens 30 Gew.-% Ethylen, mindestens 30 Gew.-% Propylen und 0,5 bis 15 Gew.-% einer nichtkonjugierten diolefinischen Komponente hergestellt.

Als Terkomponnete werden in der Regel Diolefine mit mindestens 5 Kohlenastoffatomen, wie 5-Ethylidennorbornen, Dicyclopentadien, 2,2,1-Dicyclopentadien und 1,4-Hexadien angewendet. Ferner sind geeignet Polyalkylenamere wie Polypentenamer, Polyoctenamer, Polydodecanamer oder Gemische dieser Stoffe. Ferner kommen auch teilhydrierte Polybutadienkautschuke in Betracht, bei denen mindestens 70 % Restdoppelbindungen hydriert sind.

Von den vorstehend genannten Kautschuken werden insbesondere die Ethylen-Propylen-Copolymerisate sowie die Ethylen-Propylen-Terpolymerisate (EPDM-Kautschuke) verwendet. In der Regel haben EPDM-Kautschuke eine Mooney-Vikosität ML₁₋₄(100°C) von 25 bis 120. Sie sind im Handel erhältlich.

Die Herstellung des Pfropfpolymerisats auf EP(D)M-Basis kann nach verschiedenen Methoden erfolgen. Vorzugsweise wird eine Lösung des EP(D)M-Elastomeren (Kautschuks) in dem Monomerengemisch und (gegebenenfalls) indifferenten Lösungsmitteln hergestellt und durch Radikalstarter, wie Azoverbindungen oder Peroxide bei höheren Temperaturen die Pfropfreaktion durchgeführt. Beispielhaft seien die Verfahren der DE-AS 23 02 014 und DE-A 25 33 991 genannt. Es ist auch möglich - wie in der US-A 4 202 948 beschrieben - in Suspension zu arbeiten.

Bevorzugt sind Pfropfgrundlagen B1, die aufgebaut sind aus
b11) 70 bis 99,9 Gew.-%, vorzugsweise von 69 bis 79 Gew.-% mindestens eines Alkylacrylates B11 mit 1 bis 8 C-Atomen im Alkylrest, vorzugsweise n-Butylacrylat und/oder 2-Ethylhexylacrylat, insbesondere n-Butylacrylat als alleiniges Alkylacrylat,
b12) 0 bis 30 Gew.-%, insbesondere 20 bis 30 Gew.-% eines weiteren copolymerisierbaren monoethylenisch ungesättigten Monomeren B12 wie Butadien, Isopren, Styrol, Acrylnitril, Methylmethacrylat oder Vinylmethylether oder deren Mischungen,
b13) 0,1 bis 5 Gew.-%, vorzugsweise 1 bis 4 Gew.-% eines copolymerisierbaren, polyfunktionellen, vorzugsweise bi- oder tri-funktionellen, die Vernetzung bewirkenden Monomeren B13,
wobei die Summe von B11, B12 und B13 100 Gew.-% ergibt.

Als solche bi- oder polyfunktionellen Vernetzungsmonomeren B13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358. Eine Pfropfgrundlage B1, die aus den Komponenten B11, gegebenenfalls B12, und B13 aufgebaut ist, wird auch als ASA-Kautschuk bezeichnet. Dessen Herstellung ist an sich bekannt und beispielsweise in der DE-A 28 26 925, der DE-A 31 49 358 und der DE-A 34 14 118 beschrieben.

Von den Pfropfauflagen B2 sind diejenigen bevorzugt, in denen B21 Styrol oder α-Methylstyrol oder deren Mischungen und B22 Acrylnitril oder Methacrylnitril bedeutet. Als bevorzugte Monomeren-Gemische werden vor allem Styrol und Acrylnitril oder α-Methylstyrol und Acrylnitril eingesetzt. Die Pfropfauflagen B2 sind erhältlich durch Copolymerisation der Komponenten B21 und B22 sowie ggf. B23 in Gegenwart der Pfropfgrundlagen B1. Der Aufbau der Pfropfauflage B2 (Pfropfhülle) der Propfpolymerisate kann ein- oder zweistufig erfolgen.

Als weitere, radikalisch polymerisierbare Monomere B23 sind z.B. Acrylate wie tert.-Butylacrylat oder Glycidylacrylat, sowie die entsprechenden Methacrylate, geeignet.

Die Herstellung der Propfpolymerisate B kann beispielsweise nach der in der DE-C 12 60 135 beschriebenen Methode erfolgen.

Die Bedingungen der Pfropfpolymerisation werden vorzugsweise so gewählt, daß Teilchengrößen von 50 bis 700 nm (d₅₀-Wert der integralen Massenverteilung) resultieren. Maßnahmen hierzu sind bekannt und z.B in der DE-A 28 26 925 beschrieben. Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden. Um dies zu erreichen, werden die Teilchen des Kautschuks in bekannter Weise, z.B. durch Agglomeration, vergrößert, so daß der Latex bimodal (d₅₀ etwa 50 bis 180 nm und 200 bis 700 nm) aufgebaut ist.

Mischungen aus der Komponente A und B, wobei letztere ein grob- und ein feinteiliges Pfropfpolymerisat aufweist, sind z.B. in der DE-A 36 15 607 beschrieben. Mischungen aus der Komponente A und B, wobei letztere eine zweistufige Pfropfhülle aufweist, sind aus EP-A-0 111 260 bekannt.

### Komponente C

Die Komponente C ist in den erfindungsgemäßen Formmassen in einer Menge von 1 bis 97,5, vorzugsweise 3,5 bis 50, insbesondere 4 bis 40 Gew.-% enthalten. Sie ist vorzugsweise halogenfrei.

Die Copolymerisate C sind erfindungsgemäß aus
c1) 60 bis 85 Gew.-%, vorzugsweise 70 bis 83 Gew.-% Styrol oder substituierten Styrolen C1 der obigen allgemeinen Formel I oder deren Mischungen und
c2) 15 bis 40 Gew.-%, vorzugsweise 17 bis 30 Gew.-% mindestens eines ungesättigten Nitrils C2, bevorzugt Acrylnitril oder Methacrylnitril oder deren Mischungen
aufgebaut, wobei sich die Summe von c1) und c2) zu 100 Gew.-% ergänzt.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril. Es können auch mehrere der beschriebenen Copolymere gleichzeitig eingesetzt werden.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepfropft werden.

Die Copolymerisate sind an sich bekannt und lassen sich z.B. durch radikalische Polymerisation, insbesondere Emulsions-, Suspensions-, Lösungs-, Masse- und Fällungspolymerisation herstellen und weisen in der Regel Viskositätszahlen VZ von 40 bis 160 ml/g auf, bestimmt nach DIN 53727 an einer 0,5 gew.-%igen Lösung in N,N-Dimethylformamid (DMF) bei 23°C. Einzelheiten dieser Verfahren nennt z.B. R. Vieweg und G. Daumiller (Hg.), Kunststoff-Handbuch, Band V "Polystyrol", S. 118ff, Hanser-Verlag, München 1969.

### Komponente D

Die Komponente D ist in den erfindungsgemäßen Formmassen in einer Menge von 0,5 bis 50, vorzugsweise 1 bis 30 und insbesondere 1,5 bis 25 Gew.-% enthalten. Sie ist ein Copolymerisat, daß erhältlich ist durch Umsetzung von
d1) 5 bis 95, bevorzugt 10 bis 90 und besonders bevorzugt 15 bis 85 Gew.-% mindestens eines Thermoplastischen Methacrylat-Polymeren D1 enthaltend mindestens eine Art funktioneller Gruppen ausgewählt aus Epoxy, Carboxyl, Hydroxyl, Anhydrid und Oxazolin, mit
d2) 5 bis 95, bevorzugt 10 bis 90 und besonders bevorzugt 15 bis 85 Gew.-% mindestens eines thermoplastischen Polyesters D2,
wobei sich die Summe von d1) und d2) zu 100 Gew.-% ergänzt.

Komponente D wirkt als Verträglichkeitsvermittler in Formmassen enthaltend Polycarbonate, Pfropfpolymerisate und Styrolcopolymerisate.

### Komponente D1

Das thermoplastische Methacrylat-Polymere D1 enthält als Methacrylat-Monomere bevorzugt Methylmethacrylat (MMA) oder Acrylate, oder deren Mischungen. Besonders bevorzugt ist MMA.

Besonders bevorzugt ist das Methacrylat-Polymere D1 aufgebaut aus
d11) 80 bis 99,9, bevorzugt 85 bis 99,3 und insbesondere 90 bis 98,9 Gew.-% MMA (Komponente D11),
d12) 0 bis 19,9 bevorzugt 0,5 bis 14,8 und insbesondere 0,6 bis 9,5 Gew.-% mindestens eines weiteren Acrylates oder Methacrylates D12, und
d13) 0,1 bis 20, bevorzugt 0,2 bis 15 und insbesondere 0,5 bis 10 Gew.-% mindestens eines Monomeren D13 enthaltend mindestens eine Art funktioneller Gruppen ausgewählt aus Epoxy, Carboxyl, Hydroxyl, Anhydrid und Oxazolin,
wobei die Summe von d11), d12) und d13) 100 Gew.-% ergibt.

Das Methacrylat-Polymer D1 enthält demnach funktionelle Gruppen. Bei Verwendung von MMA als Methacrylat-Monomer spricht man von "reaktivem Polymethylmethacrylat" ("reaktivem PMMA"). Aus dem Vorstehenden ergibt sich, daß bevorzugt die funktionellen Gruppen durch Mitverwendung entsprechender "reaktiver" Monomere D13, die solche Gruppen enthalten, bei der Polymerisation der Methacrylat-Monomeren zum Polymer D1, in das Polymer D1 eingeführt werden.

Beispiele weiterer Arylate oder Methacrylate D12, die als Comonomere mitverwendet werden können, sind C₁- bis C₁₆-Alkylacrylate oder C₂- bis C₁₆-Alkylmethacrylate wie Methylacrylat, Ethylacrylat, n-Propylacrylat, i-Propylacrylat, n-Butylacrylat, i-Butylacrylat, t-Butylacrylat, n-Hexylacrylat, Cyclohexylacrylat, Dodecylacrylat, Ethylmethylacrylat, n-Propylmethylacrylat, i-Propylmethylacrylat, n-Butylmethylacrylat, t-Butylmethylacrylat, n-Hexylmethylacrylat, Cyclohexylmethylacrylat oder Dodecylmethacrylat.

Als reaktive Monomere D13 kommen beispielsweise in Betracht:
- für die Epoxygruppe: Glycidylmethacrylat, Isopropenylglycidylether, Allylglycidylether, bevorzugt Glycidylmethacrylat;
- für die Carboxylgruppe: Acrylsäure, Methacrylsäure, bevorzugt Acrylsäure;
- für die Hydroxylgruppe: Hydroxyalkylacrylate bzw. -methacrylate, bevorzugt Hydroxyethylhexylacrylat;
- für die Anhydridgruppe: Carbonsäureanhydride wie Maleinsäureanhydrid;
- für die Oxazolingruppe: Vinyloxazolin, Isopropenyloxazolin, bevorzugt Vinyloxazolin.

Soll das Methacrylat-Polymer D1 verschiedene Arten funktioneller Gruppen enthalten, kann man mehrere reaktive Monomere D13 verwenden.

In den Polymeren D1 können die Monomerbausteine D11, D13 sowie gegebenenfalls D12 statistisch verteilt sein oder eine Block- oder tapered-Struktur aufweisen (tapered bedeutet Gradient von D11-reich (D13-arm) nach D11-arm (D13-reich) oder umgekehrt.

Üblicherweise haben die Polymere D1 mittlere Molekulargewichte M_{w} (Gewichtsmittelwert) von 30 000 bis 500 000, bevorzugt 40 000 bis 450 000, insbesondere 45 000 bis 300 000 g/mol.

Die Herstellung der Polymere D1 erfolgt nach bekannten Methoden, z.B. durch radikalische, group-transfer- oder anionische Polymerisation.

Die radikalische Polymerisation ist bekannt und kann z.B. als Substanz-, Lösungs- oder Perlpolymerisation durchgeführt werden. Sie wird beispielsweise in den Schriften NL-A 6605289, DE-A 12 31 013, DE-A 12 98 272, DE-A 36 31 826, JP-A 85/147417 und EP-A 457 147 beschrieben. Die radikalische Polymerisation ergibt in der Regel eher breite Molmassenverteilungen (Verhältnis Gewichtsmittel/Zahlenmittel M_{w}/Mₙ > 2). Weitere Einzelheiten finden sich auch in Vieweg/Esser, Kunststoff-Handbuch, Band 9 "Polymethacrylate", Hanser-Verlag München 1975.

Die anionische Polymerisation liefert dagegen eher enge Molmassenverteilungen (M_{w}/Mₙ ≤ 2). Ausführliche Beschreibungen der anionischen Polymerisation finden sich u.a. in M. Swarcz, M. van Beylen: "Ionic Polymerization and Living Polymers", Chapman & Hall, New York, London 1993, S. 120 - 130; M. Morton "Anionic Polymerization: Principles and Practice", Academic Press, New York, London, 1983, S. 23 - 27; T.P. Davis, D. M. Haddleton and S. N. Richards, J. Macromol. Sci.-Rev. Macromol. Chem. Phys., C34, 243 (1994) und P. Teyssie, P. Bayard, R. Jerome, K. Varshney, J.-S. Wang, P. Heim and B. Vuillemin, Macromol. Symp., 98, 171 (1995). Auch eine lebende anionische Polymerisation der Monomeren D11 bis D13 in Gegenwart von polaren aprotischen Lösungsmitteln (insbesondere THF) mit Lithiumalkylen als Initiator bei Temperaturen zwischen -120 und +20°C, bevorzugt ist der Bereich zwischen -100 und -20°C, ist möglich.

### Komponente D2

Der thermoplastische Polyester D2 ist bevorzugt aromatisch oder teilaromatisch.

Unter einem aromatischen Polyester werden im Sinne der vorliegenden Erfindung nicht Polycarbonate verstanden, wie sie als Komponente A eingesetzt werden können. Die aromatischen Polyester leiten sich von aromatischen Dihydroxyverbindungen und aromatischen Dicarbonsäuren bzw. aromatischen Hydroxycarbonsäuren ab. Als aromatische Dihydroxyverbindungen eignen sich die bereits unter A beschriebenen Verbindungen der allgemeinen Formel I.

Zu den bevorzugten Dihydroxyverbindungen zählen Dihydroxydiphenyl, Di-(hydroxyphenyl)alkane, Di-(hydroxyphenyl)cycloalkane, Di-(hydroxyphenyl)sulfid, Di-(hydroxyphenyl)ether, Di-(hydroxyphenyl)sulfoxid, α,α'-Di-(hydroxyphenyl)-dialkylbenzol, Di-(hydroxyphenyl)sulfon, Di-(hydroxybenzoyl)benzol, Resorcin und Hydrochinon sowie deren kernalkylierte Derivate. Von diesen werden 4,4'-Dihydroxydiphenyl, 2,4-Di-(4'hydroxyphenyl)-2-methylbutan, α,α'-Di-(4-hydroxyphenyl)-p-diisopropylbenzol, 2,2-Di(3'-methyl-4'-hydroxyphenyl)propan oder 2,2-Di-(3'-chlor-4,-hydroxyphenyl)propan, sowie insbesondere 2,2-Di-(4,-hydroxyphenyl)propan, 2,2-Di(3',5,-dichlordihydroxyphenyl)propan, 1,1-Di(4,-hydroxyphenyl)cyclohexan, 3,4,-Dihydroxybenzophenon, 4,4'-Dihydroxydiphenylsulfon oder 2,2-Di(3',5,-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Die aromatischen Dicarbonsäuren weisen in der Regel von 8 bis 30 C-Atome auf. Der bzw. die aromatischen Ringe können substituiert sein, z.B. mit einem oder mehreren C₁-bis C₄-Alkylresten wie Methyl, Ethyl, n-Propyl, i-Propyl, n-Butyl, i-Butyl oder t-Butyl. Als bevorzugte aromatische Dicarbonsäuren sind Terephthalsäure, Isophthalsäure oder 2,6-Naphthalindicarbonsäure zu nennen. Bevorzugt werden Mischungen auf 5 bis 100 mol-% Isophthalsäure und 0 bis 95 mol-% terephthalsäure, insbesondere Mischungen von 20 bis 50 mol-% Isophthalsäure und 50 bis 80 mol-% Terephthalsäure.

Teilaromatische Polyester sind solche auf Basis von aromatischen Dicarbonsäuren und einer oder mehreren unterschiedlichen aliphatischen Dihydroxyverbindungen.

Eine Gruppe bevorzugter teilaromatischer Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure wie oben beschrieben stammt. Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt sein.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethylol und Neopentylglykol oder deren Mischungen bevorzugt.

Als besonders bevorzugte teilaromatische Polyester sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt.

Die Viskositätszahl der Polyester liegt im allgemeinen im Bereich von 70 bis 220, vorzugsweise von 100 bis 150 (gemessen in einer 0,5 gew.-%igen Lösung in einem Phenol/o-Dichlorbenzolgemisch (Gew.-Verh. 1:1 bei 25°C).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

### Umsetzung der Komponenten D1 und D2 zum Copolymerisat D

Die Umsetzung des Methacrylat-Polymeren D1 mit dem Polyester D2 erfolgt entweder vorab, indem man D1 und D2 separat miteinander umsetzt und das erhaltene Copolymerisat D mit den anderen Komponenten A bis C und ggf. E bis H zur thermoplastischen Formmasse vermischt, oder in situ bei der Herstellung der Formmassen, indem man D1 und D2 den anderen Komponenten der Formmasse zufügt und sich demnach das Copolymerisat D erst beim Abmischen der Formmasse bildet.

Bei der separaten Umsetzung vorab nimmt man bevorzugt die Umsetzung vor, indem man die Ausgangsstoffe D1 und D2 unter Aufschmelzen vermischt und die Mischung für eine gewisse Zeit (die ausreichend ist zum Ablauf der chemischen Reaktion zwischen D1 und D2) schmelzflüssig hält und erforderlichenfalls durchmischt.

Bevorzugt setzt man bei der separaten Umsetzung D1 und D2 in einem Schmelzemischaggregat um. Solche Schmelzemischaggregate sind z.B. Schneckenkneter, etwa einwellige Kneter (z.B. Ko-Kneter, Einschneckenextruder insbesondere mit Misch- und Scherteilen), zweiwellige Kneter (z.B. Zweischneckenextruder Typ ZSK oder ZE, Kombiplast-Extruder, Doppelschnecken-Knetmischer MPC, zweistufige Mischer FCM, Knetschneckenextruder KEX, Schwerwalzenextruder). Ebenso sind Kneter mit oder ohne Stempel geeignet, Trogkneter und Banburry-Mischer. Einzelheiten findet der Fachmann z.B. in Saechtling (Hg.), Kunststoff-Taschenbuch, 27. Ausgabe, Carl Hanser Verlag München 1998, S. 202-211.

Besonders bevorzugt erhält man das Copolymerisat D durch Schmelzekompoundierung des Methacrylat-Polymeren D1 mit dem Polyester D2.

Üblicherweise setzt man D1 und D2 bei Temperaturen von 230 bis 300°C, bevorzugt 235 bis 295 und insbesondere 240 bis 290°C um. Bei der Verwendung von Schmelzemischaggregaten sind die vorgenannten Temperaturen die Temperaturen der Mischaggregate (Extruder, Kneter etc.)

Die Dauer der Umsetzung - bei Schmelzemischaggregaten die Verweilzeiten - betragen in der Regel 0,5 bis 30, bevorzugt 0,75 bis 20 und insbesondere 1 bis 10 min. Nach erfolgter Umsetzung wird die Schmelze in der Regel auf bekannte Weise ausgetragen, abgekühlt und granuliert.

In einer anderen Ausführungsform erfolgt die separate Umsetzung von D1 mit D2 zum Copolymerisat D durch Lösen oder Quellen der Ausgangsstoffe D1 und D2 in geeigneten Lösungs- bzw. Quellungsmitteln und Inkontaktbringen der erhaltenen Lösungen bzw. gequollenen Substanzen. Beispielsweise kann man die Lösungen bei Temperaturen von 10 bis 200°C vermischen.

Geeignete Lösungsmittel für das Methacrylat-Polymer D1 und für den Polyester D2 sind z. B. halogenierte Alkohole wie Hexafluoroisopropanol (HFIP). Die Lösungsmittel werden nach erfolgter Umsetzung üblicherweise entfernt, z.B. mittels eines Eindampfextruders.

Bei der situ-Umsetzung vermischt man die Ausgangsstoffe Methacrylat-Polymer D1 und Polyester D2 in üblicher Weise mit den Komponenten A bis C und ggf. E bis H, wie dies weiter unten unter "Herstellung der Formmassen" beschrieben ist, wobei sich das Copolymerisat D bildet.

Verbindungen, die der vorgenannten Komponente D entsprechen, sind als solche ebenfalls Gegenstand der Erfindung.

### Komponente E

Die Komponente E ist in den erfindungsgemäßen Formmassen in einer Menge von 0 bis 50, vorzugsweise 0 bis 45, insbesondere 0 bis 40 Gew.-% enthalten.

Bei der Komponente E handelt es sich um Füllstoffe (auch Verstärkungsstoffe genannt). Es kommen insbesondere teilchenförmige mineralische Füllstoffe E1 und faserförmige Füllstoffe E2 in Betracht. Man kann teilchenförmige mineralische Füllstoffe E1 alleine, oder faserförmige Füllstoffe E2 alleine, verwenden.

In den Mischungen beträgt der Anteil der Komponente E1 vorzugsweise 5 bis 95 und insbesondere 5 bis 90 Gew.-%, der Anteil der Komponente E2 vorzugsweise 5 bis 95 und insbesondere 10 bis 95 Gew.-%, bezogen auf die Komponente E.

Als teilchenförmige mineralische Füllstoffe E1 eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45, bevorzugt weniger als 40 Mikrometer aufweisen und deren sogenanntes Apektverhältnis vorzugsweise im Bereich von 1 bis 25, bevorzugt im Bereich von 2 bis 20 liegt, bestimmt am fertigen Produkt, d.h. in der Regel einem Spritzgußformteil. Das Aspektverhältnis ist das Verhältnis von Teilchendurchmesser zu Dicke (größter Ausdehnung zu kleinster Ausdehnung).

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 Mikrometer beträgt, kann auch mittels Siebanalyse gemessen werden.

Besonders bevorzugt werden als teilchenförmige Füllstoffe E1 Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 Mikrometer und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 Mikrometer und einem Aspektverhältnis von 1,2 bis 20, jeweils bestimmt am fertigen Produkt.

Als Komponente E2 werden z.B. faserförmige Füllstoffe wie Kohlenstofffasern, Kaliumtitanat-Whisker, Aramidfasern oder bevorzugt Glasfasern eingesetzt. Die Glasfasern können zur besseren Verträglichkeit mit der Polymermatrix mit einer Schichte und/oder einem Haftvermittler ausgerüstet sein. In einer bevorzugten Ausführungsform weisen mindestens 50 Gew.-% der faserförmigen Füllstoffe (Glasfasern) eine Länge von mehr als 50 Mikrometer auf. Die verwendeten (Glas)fasern können vorzugsweise einen Durchmesser von bis zu 25, besonders bevorzugt 5 bis 13 Mikrometer aufweisen. Vorzugsweise weisen mindestens 70 Gew.-% der Glasfasern eine Länge von mehr als 60 Mikrometer auf. Besonders bevorzugt betragt im fertigen Formteil die mittlere Länge der Glasfasern 0,08 bis 0,5 mm.

Die Länge der Glasfasern bezieht sich auf ein fertiges Formteil, das beispielsweise nach dem Spritzgießen erhalten wird. Dabei können die Glasfasern den Formmassen bereits als Kurzglasfasern in der entsprechend abgelängten Form oder auch in Form von Endlossträngen (Rovings) zugesetzt werden. Kohlenstoff- oder Glasfasern können auch in Form von Geweben, Matten oder Glasseidenrovings eingesetzt werden.

### Komponente F

Die Komponente F ist in den erfindungsgemäßen Formmassen in einer Menge von 0 bis 2, vorzugsweise 0 bis 1,8, insbesondere 0 (bei Vorliegen 0,1) bis 1,5 Gew.-% enthalten.

Komponente F ist eine - bevorzugt niedermolekulare halogenfreie - organische Säure.

Unter niedermolekular im Sinne der vorliegenden Erfindung werden bis zu mehrkernige, beispielsweise bis zu fünfkernige Verbindungen, insbesondere monomolekulare Verbindungen verstanden.

Die Säuren sind bevorzugt halogenfrei, d.h. enthalten im molekularen Gerüst keine Halogene. Säuren, die geringfügige halogenhaltige Verunreinigungen aufweisen, sind dagegen erfindungsgemäß mit umfaßt. Unter Säuren in Sinne der Erfindung werden auch deren Hydrate verstanden.

Vorteilhafterweise werden Säuren eingesetzt, die bei den Verarbeitungstemperaturen nicht oder nur gering flüchtig sind bzw. bei Temperaturen von bis zu etwa 320°C keine oder nur geringe Zersetzungsneigung zeigen.

Die Säuren können eine, zwei oder mehrere, beispielsweise bis zu zehn Säuregruppen enthalten.

Bevorzugt werden organische Säuren eingesetzt. Es kommen sowohl aromatische als auch aliphatische Säuren in Betracht. Ebenso können aliphatisch-aromatische Säuren verwendet werden. Zu den bevorzugten Säuren zählen Mono-, Di- und Polycarbonsäuren, z.B. Palmitinsäure, Stearinsäure, Benzoesäure und substituierte Benzoesäuren, Isophthalsäure, Terephthalsäure, Trimellithsäure, Sulfonsäuren wie p-Toluolsulfonsäure und aliphatische Sulfonsäuren, Fumarsäure, Zitronensäure, Mandelsäure oder Weinsäure.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

### Komponente G

Komponente G ist in den erfindungsgemäßen Formmassen in einer Menge von 0 bis 25, vorzugsweise 0 bis 20, insbesondere 0 (bei Vorliegen 0,2) bis 15 Gew.-% enthalten.

Komponente G ist eine halogenfreie Phosphorverbindung.

Als Komponente G können alle bekannten üblichen phosphorhaltigen Flammschutzmittel eingesetzt werden. Bevorzugt werden die in der DE-A-40 34 336 und/oder die in der EP-A 0 522 397 aufgeführten Flammschutzmittel eingesetzt. Beispiele sind Tri-(2,6- dimethylphenyl)phosphat, Triphenylphosphat, Tricresylphosphat, Diphenyl-2-ethyl-cresylphosphat, Diphenyl-cresylphosphat, Tri(isopropylphenyl)phosphat sowie Phosphorsäure-bis-phenyl-(4-phenylphe-nyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis- (benzylphenyl)-ester, Phosphorsäure-tris-(benzylphenyl)-ester, Phosphorsäure-bis-phenyl-(1-phenylethyl)-phenyl)-ester, Phosphorsäure-phenyl-bis-(1-phenylethyl)-phenyl)-ester, Phosphorsäure-tris-(1-phenylethyl)-phenyl)-ester, Phosphorsäure-bis-phenyl-(2-methyl-1-phenylethyl)-phenyl-ester, Phosphorsäure-phenyl-bis-(1-methyl-1-phenylethyl)-phenyl-ester, Phosphorsäure-tris-((1-methyl-1-phenylethyl)-phenyl)-ester, Phosphorsäurephenyl-bis-(4-(1-phenylethyl)-2,6-dimethylphenyl)-ester, Phosphorsäure-bis-phenyl-2,4-di-benzylphenylester, Phosphorsäure-bis-phenyl-2,4-di(1-phenylethyl)-phenylester und Phosphorsäure-bis-phenyl-2,4-di-(1-methyl-1-phenylethyl)-phenylester. Sie können auch im Gemisch mit Triphenylphosphinoxid oder Tri-(2,6-dimethylphenyl)phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Außerdem wird auf die in EP-A-0 103 230, EP-A-0 174 493, EP-A-0 206 058, EP-A-0 363 608 und EP-A-0 558 266 genannten Phosphorverbindungen verwiesen.

### Komponente H

Komponente H wird in Mengen von 0 bis 45, vorzugsweise 0 bis 20, insbesondere 0 (bei Vorliegen 0,4) bis 10 Gew.-% eingesetzt.

### Komponente H sind weitere Zusatzstoffe.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen 0 bis 45, vorzugsweise 0 bis 20, insbesondere 0 (bei Vorliegen 0,2) bis 10 Gew.-%, bezogen auf das Gesamtgewicht der Zusammensetzung.

Pigmente und Farbstoffe sind allgemein in Mengen von 0 bis 4, bevorzugt 0 bis 3,5 und insbesondere 0 (bei Vorliegen 0,5) bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Weitere geeignete Farbmittel sind z.B. in R. Gächter und H. Müller (Hg.), Plastics Additives Handbook, 4^{th} ed. 1993, Reprint Nov. 1996, Hanser Verlag München, auf S. 647 bis 676 beschrieben.

Außerdem sind fluoreszierende Weißmacher zu nennen, z.B. Bis-benzoxazole, Triazin-phenylcumarine, Benzotriazol-phenylcumarine, Naphthotriazol-phenylcumarine, Bis-(styryl)bisphenyle. Weitere Beispiele nennt das erwähnte Buch von Gächter und Müller (4. Auflage 1993) auf S. 779-785.

Oxidationsverzögerer und Wärmestabilisatoren; die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Sterainsäure sowie Dialkylketone, z.B. Distearylketon, eingesetzt werden. Weiterhin können auch Ethylenoxid-Propylenoxid-Copolymere als Gleit- und Entformungsmittel verwendet werden.

Insbesondere vorteilhaft ist der Einsatz von UV- und Wärmestabilisatoren für Polycarbonat und Styrolcopolymere. Beispiele geeigneter Stabilisatoren sind zudem in DE-A-44 19 897 aufgeführt. Weiterhin können Umesterungsinhibitoren, wie Phosphate, Phosphite oder Phosphonite enthalten sein.

### Herstellung der Formmassen

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der (beispielsweise trockenen) Komponenten A bis D und gegebenenfalls E bis H - bzw. im Fall der oben erwähnten in situ-Herstellung des Copolymerisates D, das Mischen der Komponenten A, B, C, D1 und D2 und ggf. E bis H - kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wäßrigen Dispersion isoliert worden sind.

Demnach wurde auch ein Verfahren zur Herstellung der erfindungsgemäßen Formmassen durch Mischen der trockenen Komponenten A bis D (bzw. D1 und D2) und gegebenenfalls E bis H bei 200 bis 320°C gefunden.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Formkörpern, Fasern und Folien eingesetzt werden. Zudem können sie besonders bevorzugt zur Herstellung von Karosserieteilen eingesetzt werden.

Insbesondere sind die Formmassen zur Herstellung von Karosserieteilen (z.B. im Automobilsektor) geeignet, besonders bevorzugt für großflächige Karosserieaußenteile wie Kotflügel, Heckklappen, Fronthauben, etc.

Die Erfindung betrifft demnach auch entsprechende Formkörper, Fasern oder Folien sowie Karosserieteile.

Die Erfindung betrifft außerdem die Verwendung von Copolymerisaten D wie oben definiert als Verträglichkeitsvermittler in Formmassen enthaltend Polycarbonate, Pfropfpolymerisate und Styrolcopolymerisate.

Die erfindungsgemäßen Formmassen sowie Formkörper, Fasern und Folien zeichnen sich durch hohe Steifigkeit und gute Zähigkeit aus. Der Einfluß der Verarbeitungbedingungen auf die aus den erfindungsgemäßen Formmassen hergestellten Formteilen ist gering und die unerwünschte Anisotropie der mechanischen Eigenschaften ist vermindert. Die Delaminationsneigung ist ebenfalls in vorteilhafter Weise verringert.

Die Erfindung wird durch die nachfolgenden Beispiele näher erläutert.

### Beispiele

Die mittlere Teilchengröße und die Teilchengrößenverteilung wurden aus der integralen Massenverteilung an einer veraschten und mittels Ultraschall dispergierten Probe bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796 bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden d₁₀- und d₉₀-Werte herangezogen. Der d₁₀- bzw. d₉₀-Wert der integralen Massenverteilung ist dabei entsprechend dem d₅₀-Wert definiert mit dem Unterschied, daß sie auf 10 bzw. 90 Gew.-% der Teilchen bezogen sind. Der Quotient Q = (d₉₀-d₁₀)/d₅₀ stellt ein Maß für die Verteilungsbreite der Teilchengröße dar.

Es wurden folgende Komponenten eingesetzt:
A: Ein handelsübliches Polycarbonat auf der Basis von Bisphenol A mit einer Viskositätszahl VZ_{A} von 61,3 ml/g, gemessen nach DIN 53727 an einer 0,5 Gew.-%-igen Lösung in Methylenchlorid bei 23°C.
B1: Ein feinteiliges Pfropfpolymerisat, hergestellt aus
   b1) 16 g Butylacrylat und 0,4 g Tricyclodecenylacrylat, die in 150 g Wasser unter Zusatz von 1 g des Natriumsalzes einer C₁₃-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zu gegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).
   b2) 150 g des nach b1) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung dieser Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die mittlere Teilchengröße 91 nm.
B2: Ein grobteiliges Pfropfpolymerisat, das folgendermaßen hergestellt wurde:
   b3) Zu einer Vorlage aus 1,5 g des nach b1) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂- C₁₈-Paraffinsulfonsäure in 25 g Wasser bei 60°C zugegeben. Anschließend wurde 2 Stunden nachpolymerisiert. Der erhaltene Latex des vernetzten Butarylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).
   b4) 150 g des nach b3) erhaltenen Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.
C: Ein Copolymer aus 81 Gew.-% Styrol und 19 Gew.-% Acrylnitril, hergestellt durch kontinuierliche Lösungspolymerisation, wie es im Kunststoff-Handbuch, Hg. R. Vieweg und G. Daumiller, Band 5 "Polystyrol", Hanser-Verlag, München 1969 auf S. 122-124 beschrieben ist. Die Viskositätszahl (bestimmt nach DIN 53727 an einer 0,5 gew.-%igen Lösung in Dimethylformamid bei 23°C) betrug 72 ml/g, entsprechend einem gewichtsmittleren Molekulargewicht von 174 000 g/mol.
D: Ein Copolymerisat, hergestellt durch Schmelzekompoundierung von
   d1) 50 Gew.-% eines Methacrylat-Polymeren D1 aus
      d11) 93 Gew.-% MMA
      d12) 2 Gew.-% n-Butylacrylat, und
      d13) 5 Gew.-% Glycidylacrylat,
      (die Viskositätszahl von D1 betrug 66 ml/g, gemessen an einer 0,5 gew.-%igen Lösung in Chloroform bei 23°C nach DIN 53727), und
   d2) 50 Gew.-% des Polyesters Polybutylenterephthalat, D2 (es wurde Ultradur® B 4520 von BASF verwendet; die Viskositätszahl von D2 betrug 130 ml/g, gemessen an einer 0,5 gew.-%igen Lösung in einer 1:1-Mischung von Phenol und o-Chlorbenzol bei 25°C nach ISO 1183).
   Zur Schmelzkompoundierung wurde ein Ein/Zweiwellenextruder Typ ZSK 30 von Fa. Werner & Pfleiderer verwendet. Die Extrudertemperatur betrug 250°C und die Verweilzeit betrug 2 min.
DV: Ein Umsetzungsprodukt aus einem mit Oxazolingruppen modifizierten Styrol-Acrylnitril-Copolymeren mit einem Polybutylenterephthalat, wie beschrieben in der DE-A 19959420, S. 8, Z. 62-66 (zum Vergleich).
E1: Talkum IT-Extra von Norwegian Talc, d₁₀ = 1,7 Mikrometer, d₉₀ = 10,82 Mikrometer, bestimmt mittels Laserbeugung. Dazu wurde das Talkum in einer Suspensionszelle mit einer Mischung aus 99 Gew.-Teilen entionisiertem Wasser und 1 Gew.-Teil des Tensids CV-K8 (von CV-Chemievertrieb, Hannover) mit einem Magnetrührer (60 min⁻¹) suspendiert, der Talkumgehalt der Suspension betrug 1•10⁻⁴ g/ml und der pH-Wert war 8,5.
E2: Glasfaser mit einer Epoxysilan-Schlichte, einem Faserdurchmesser von 10 Mikrometer und einer Stapellänge von 4,5 mm (z.B. PPG 3786 von PPG Industries).
   Die Bestimmung der Faserlängen wurde folgendermaßen durchgeführt: die mittlere Länge (Zahlenmittelwert) der Fasern wurde am Glührückstand von Formkörpern bestimmt. Dazu wurde der Glührückstand in Zeiss-Immersionsöl aufgeschwemmt. Um eine Unterscheidung zwischen den Füllstoffpartikeln und den Fasern zu gewährleisten, wurde die Länge von mindestens 100 Fasern manuell bestimmt und daraus der Mittelwert berechnet.
F: Zitronensäure-Hydrat, Reinheit 99 %, von Aldrich.
H: Ein hochmolekularer Mehrkomponentenester mit einer Viskosität von 110 bis 150 mPa*s bei 80°C (Loxiol® G 70S von Henkel).

### Herstellung der thermoplastischen Formmassen

Die Komponenten A bis H wurden auf einem Zweiwellenextruder (ZSK 30 von Werner & Pfleiderer) bei 250 bis 280°C gemischt, die Mischung als Strang ausgetragen, gekühlt und granuliert.

Das getrocknete Granulat wurde im Spritzguß bei 260 bis 280°C Schmelztemperatur zu Normkleinstäben, ISO-Prüfkörpern, Rundscheiben (60 mm Durchmesser, 3 mm Dicke), Zugstäben und Platten 1200 x 300 x 3 mm verarbeitet. Die Werkzeugoberflächentemperatur betrug in allen Fällen 80°C.

Die Wärmeformbeständigkeit Vicat B der Proben wurde mittels der Vicat-Erweichungstemperatur ermittelt. Die Vicat-Erweichungstemperatur wurde nach DIN 53 460, Methode B, mit einer Kraft von 49,05 N und einer Temperatursteigerung von 50 K je Stunde an Normkleinstäben ermittelt.

Die Fließfähigkeit der Formmassen wurde als Melt Volume Index (MVI) nach DIN 53 735 bei einer Temperatur von 260°C und 5 kg Belastung bestimmt.

Der E-Modul wurde nach ISO 527 an Zugstäben im Zugversuch bei 23°C bestimmt.

Das Bruchverhalten wurde als Schädigungsarbeit Wₛ an Platten 1200x300x3 mm mittels des Durchstoßtests nach DIN 53 443 bei -30°C geprüft (Durchstoßarbeit).

Die Kerbschlagzähigkeit a_{K} wurde nach ISO 179 1eA bei 23°C an ISO-Prüfkörpern geprüft. Zur Prüfung der Anisotropie der mechanischen Eigenschaften wurden aus den Platten ISO-Prüfkörper parallel und senkrecht zur Fließrichtung (Fließrichtung der Polymerschmelze in der Spritzgußform) herausgefräst und an den ISO-Prüfkörpern die Weste "a_{K} parallel" und "a_{K} senkrecht" bestimmt. Je geringer der Unterschied Δa_{K} = a_{K} senkrecht - a_{K} parallel, desto kleiner war die Anisotropie.

Dampfstrahltest: lackierte Probekörper wurden mit einem Dampfstrahltest auf Delaminiation geprüft. Dazu wurden aus der großen Platte (1200x300x3 mm) in der Nähe des Angusses kleine Platten (60x60x3 mm) ausgesägt. Diese kleinen Platten wurden mit einem off-line Lacksystem (Primer 78566, Basislack 75803 und Klarlack 76562, alle von Fa. Wörwag, Stuttgart) in üblicher Weise lackiert. Der Dampfstrahltest erfolgte nach der DaimlerChrysler-Norm DBL 5416, indem zunächst die lackierten kleinen Platten mit einem Schraubenzieher kreuzförmig angeritzt wurden. Der auf diese Weise eingebrachte Riss ging durch die Lackschicht hindurch bis in das Kunststoffsubstrat hinein. Danach wurde mit einem Dampfstrahlgerät ein fächerförmiger Wasserstrahl von 60°C Wassertemperatur und 70 bar Wasserdruck 60 sec lang auf den Riss gerichtet. Der Abstand zwischen der lackierten Platte und dem Düsenkopf des Dampfstrahlgerätes betrug 10 cm. Der Test galt als bestanden, wenn die durch die Einwirkung des Wasserstrahls verursachte seitliche Ausweitung des Risses in jede Richtung kleiner als 1 mm war. Es bedeuten:
D: Delamination von 1 mm oder mehr, d.h. Material und/oder Lack platzte ab
iO: in Ordnung, d.h. keine Abplatzungen von Material und Lack, oder kleiner als 1 mm.

Die Zusammensetzungen und Eigenschaften oder Formmassen sind den nachfolgenden Tabellen zu entnehmen. V bedeutet zum Vergleich, - bedeutet nicht vorhanden bzw. nicht bestimmt. Berechnetes
Δa_{K} = a_{K} senkrecht - a_{K} parallel.

**Tabelle 1:**

| Zusammensetzung der Formmassen [Gew.-Teile] | | | | | | | |
|---|---|---|---|---|---|---|---|
| Beispiel → | V1 | V2 | 3 | V4 | V5 | 6 | 7 |
| A | 60 | 57,5 | 57,5 | 65 | 62,5 | 62,5 | 62,5 |
| B1 | 10 | 10 | 10 | 6 | 6 | 6 | 6 |
| B2 | 10 | 10 | 10 | 6 | 6 | 6 | 6 |
| C | 20 | 17,5 | 17,5 | 11 | 8,5 | 8,5 | 8,5 |
| D | - | - | 5 | - | - | 5 | 5 |
| DV | - | 5 | - | - | 5 | - | - |
| E1 | - | - | - | 12 | 12 | 12 | 11 |
| E2 | - | - | - | - | - | - | 1 |
| F | - | - | - | 0,2 | 0,2 | 0,2 | 0,2 |
| H | 0,5 | 0,5 | 0,5 | 0,5 | 0,5 | 0,5 | 0,5 |

**Tabelle 2:**

| Eigenschaften der Formmassen | | | | | | | |
|---|---|---|---|---|---|---|---|
| Beispiel | V1 | V2 | 3 | V4 | V5 | 6 | 7 |
| Vicat B [°C] | 122 | 120 | 121 | 135 | 133 | 133 | 133 |
| Durchstoßarbeit W_{S} bei-30°C [Nm] | 75 | 87 | 86 | 69 | 77 | 79 | 68 |
| MVI [ml/10 min] | 13 | 13 | 15 | 9 | 8 | 11 | 11 |
| E-Modul [N/mm²] | 2420 | 2340 | 2480 | 3350 | 3260 | 3400 | 3460 |
| a_{K} senkrecht [kJ/m²] | 85 | 87 | 89 | 43 | 44 | 46 | 34 |
| a_{K} parallel [kJ/m²] | 41 | 70 | 72 | 19 | 32 | 34 | 25 |
| Δa_{K} [KJ/m²] | 44 | 17 | 17 | 24 | 12 | 12 | 9 |
| Dampfstrahltest | D | D | iO | D | iO | iO | iO |

Die Beispiele V1 bis 3 betreffen ungefüllte Formmassen, die sich in der Komponente D unterscheiden. Nicht erfindungsgemäße Formmassen ohne Komponente D (Beispiel V1) zeigten deutlich schlechtere Durchstoßarbeit Wₛ und erheblich größere Anisotropie (Δa_{K}), jeweils verglichen mit Beispiel V2 bzw. 3. Der Dampfstrahltest wurde nicht bestanden, d.h. die Formteile delaminierten. Nicht erfindungsgemäße Formmassen mit einer Komponente DV gemäß der DE-A 19959420 (Beispiel V2) zeigten zwar einige ähnliche thermische und mechanische Eigenschaften wie das erfindungsgemäße Beispiel 3, jedoch wurde der Dampfstrahltest nicht bestanden. Außerdem zeigten Beispiele V1 und V2 eine schlechtere Fließfähigkeit (MVI) als das erfindungsgemäße Beispiel 3.

Nur die erfindungsgemäßen Formmassen (Beispiel 3) zeigten zugleich gute thermische bzw. mechanische Eigenschaften - hohe Wärmeformbeständigkeit (Vicat B), gute Fließfähigkeit (MVI), gute Steifigkeit (E-Modul), hohe Zähigkeit (Wₛ) -, wenig Anisotropie (Δa_{K}) und keine Delamination (Dampfstrahltest bestanden).

Die Beispiele V4 bis 6 betreffen Talkum-gefüllte Formmassen, die sich wiederum in der Komponente D unterscheiden. Erneut zeigten nicht erfindungsgemäße Formmassen ohne Komponente D (Beispiel V3) schlechtere Durchstoßarbeit Wₛ, größere Anisotropie (Δa_{K}), und sie delaminierten, verglichen mit Beispiel V5 bzw. 6. Nicht erfindungsgemäße Formmassen mit der Komponente DV wiesen eine signifikant schlechtere Fließfähigkeit (MVI) auf und eignen sich daher schlechter zum Spritzgießen großer Formteile wie z.B. PKW-Heckklappen.

Nur die erfindungsgemäßen Formmassen (Beispiel 6) wiesen das bei Beispiel 3 beschriebene, vorteilhafte Eigenschaftsprofil auf.

Das die erfindungsgemäße Komponente D die Anisotropie der mechanischen Eigenschaften wirksam vermindert, zeigt besonders Beispiel 7: es enthält neben (partikelförmigem) Talkum auch Glasfasern als Füllstoff E. Obwohl solche Füllstoffe die Anisotropie verstärken, ist der Δa_{K}-Wert der erfindungsgemäßen Formmasse Bsp. 7 sogar kleiner als der von Bsp. 6.

Die Beispiele zeigen, daß nur die erfindungsgemäße Zusammensetzung das vorteilhafte, verbesserte Eigenschaftsprofil der Formmassen gewährleistet.

## Patentansprüche

1. Thermoplastische Formmassen, enthaltend die Komponenten A, B, C und D sowie gegebenenfalls E, F, G und H, deren Summe 100 Gew.-% ergibt,
A) 1 bis 97,5 Gew.-% mindestens eines aromatischen Polycarbonats A,
B) 1 bis 97,5 Gew.-% mindestens eines Pfropfpolymerisats.B aus
b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,
b2) 20 bis 60 Gew.-% einer Pfropfauflage B2 aus
b21) 60 bis 95 Gew.-% Styrol oder substituierten Styrolen B21 der allgemeinen Formel I 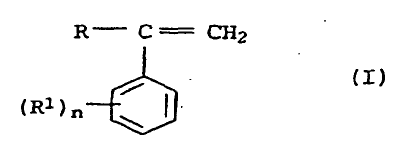 worin R einen C₁₋₈-Alkylrest oder Wasserstoff und R¹ einen C₁₋₈-Alkylrest bedeutet und n den Wert 1, 2 oder 3 hat, oder deren Mischungen und
b22)5 bis 40 Gew.-% mindestens eines ungesättigten Nitrils B22,
C) 1 bis 97,5 Gew.-% mindestens eines thermoplastischen Copolymerisats C aus,
c1) 60 bis 85 Gew.-% Styrol oder substituierten Styrolen C1 der allgemeinen Formel I oder deren Mischungen und
c2) 15 bis 40 Gew.-% mindestens eines ungesättigten Nitrils C2,
D) 0,5 bis 50 Gew.-% mindestens eines Copolymerisats D, erhältlich durch Umsetzung von
d1) 5 bis 95 Gew.-% mindestens eines thermoplastischen Methacrylat-Polymeren D1 enthaltend mindestens eine Art funktioneller Gruppen, ausgewählt aus Epoxy, Carboxyl, Hydroxyl, Anhydrid und Oxazolin, mit
d2) 5 bis 95 Gew.-% mindestens eines thermoplastischen Polyesters D2,
E) 0 bis 40 Gew.-% mindestens eines Füllstoffs E,
F) 0 bis 2 Gew.-% mindestens einer organischen Säure F,
G) 0 bis 25 Gew.-% mindestens einer halogenfreien Phosphorverbindung G,
H) 0 bis 45 Gew.-% weiterer Zusatzstoffe H.

2. Formmassen nach Anspruch 1, wobei die Polycarbonate A auf Diphenolen der allgemeinen Formel II 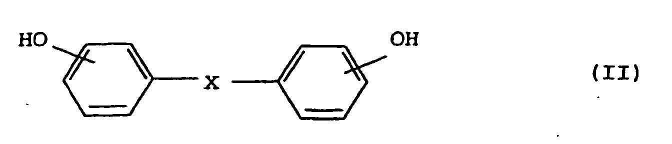 basieren, worin X eine Einfachbindung, eine C₁₋₃-Alkylen-, eine C₂₋C₃₋Alkyliden-, eine C₃₋₆-Cycloalkyliden-Gruppe, sowie -S- oder -SO₂- bedeutet.

3. Formmassen nach den Ansprüchen 1 bis 2, wobei die Pfropfgrundlage B1 des Pfropfcopolymerisats B aufgebaut ist aus
b11) 70 bis 99,9 Gew.-% mindestens eines Alkylacrylates B11 mit 1 bis 8 C-Atomen im Alkylrest,
b12) 0 bis 30 Gew.-% eines weiteren copolymerisierbaren monoethylenisch ungesättigten Monomeren B12 oder deren Mischungen, und
b13) 0,1 bis 5 Gew.-% eines copolymerisierbaren, polyfunktionellen, die Vernetzung bewirkenden Monomeren B13,
wobei die Summe von B11, B12 und B13 100 Gew.-% ergibt.

4. Formmassen nach den Ansprüchen 1 bis 3, wobei das Copolymerisat C aus 70 bis 83 Gew.-% Styrol und 17 bis 30 Gew.-% Acrylnitril aufgebaut ist.

5. Formmassen nach den Ansprüchen 1 bis 4, wobei das Methacrylat-Polymer D1 aufgebaut ist aus
d11) 80 bis 99,9 Gew.-% Methylmethacrylat D11,
d12) 0 bis 19,9 Gew.-% mindestens eines weiteren Acrylates oder Methacrylates D12, und
d13) 0,1 bis 10 Gew.-% mindestens eines Monomeren D13, enthaltend mindestens eine Art funktioneller Gruppen, ausgewählt aus Epoxy, Carboxyl, Hydroxyl, Anhydrid und Oxazolin,
wobei die Summe von D11, D12 und D13 100 Gew.-% ergibt.

6. Formmassen nach den Ansprüchen 1 bis 5, wobei als Monomer D13 Glycidylmethacrylat, Allylglycidylether, Isopropenylglycidylether oder deren Mischungen verwendet wird.

7. Formmassen nach den Ansprüchen 1 bis 6, wobei das Copolymerisat D durch Schmelzekompoundierung des Methacrylat-Polymeren D1 mit dem Polyester D2 erhältlich ist.

8. Formmassen nach den Ansprüchen 1 bis 7, wobei der Füllstoff D ausgewählt ist aus teilchenförmigen mineralischen Füllstoffen, faserförmigen Füllstoffen oder deren Mischungen.

9. Verfahren zur Herstellung von Formmassen nach den Ansprüchen 1 bis 7 durch Mischen der trockenen Komponenten A bis D und gegebenenfalls E bis H bei 200 bis 320°C.

10. Verwendung von Formmassen nach dem Ansprüchen 1 bis 7 zur Herstellung von Formkörpern, Fasern und Folien.

11. Verwendung nach Anspruch 10 zur Herstellung von Karosserieteilen.

12. Formkörper, Fasern und Folien aus einer Formmasse gemäß den Ansprüchen 1 bis 8.

13. Formkörper nach Anspruch 12 in Form von Karosserieteilen.

14. Verwendung von Copolymerisaten D wie definiert in Anspruch 1 als Verträglichkeitsvermittler in Formmassen enthaltend Polycarbonate, Pfropfpolymerisate und Styrolcopolymerisate.

15. Copolymerisate D, erhältlich durch Umsetzung von
d1) 5 bis 95 Gew.-% mindestens eines thermoplastischen Methacrylat-Polymeren D1 aufgebaut aus
d11) 80 bis 99,9, bevorzugt 85 bis 99,3 und insbesondere 90 bis 98,9 Gew.-% MMA (Komponente D11),
d12) 0 bis 19,9 bevorzugt 0,5 bis 14,8 und insbesondere 0,6 bis 9,5 Gew.-% mindestens eines weiteren Acrylates oder Methacrylates D12, und
d13) 0,1 bis 20, bevorzugt 0,2 bis 15 und insbesondere 0,5 bis 10 Gew.-% mindestens eines Monomeren D13 enthaltend mindestens eine Art funktioneller Gruppen ausgewählt aus Epoxy, Carboxyl, Hydroxyl, Anhydrid und Oxazolin,
wobei die Summe von d11), d12) und d13) 100 Gew.-% ergibt, mit
d2) 5 bis 95 Gew.-% mindestens eines thermoplastischen Polyesters D2, ausgewählt aus Polyethylenterephthalat und Polybutylenterephthalat oder deren Mischungen, wobei sich die Summe aus d1) und d2) zu 100 Gew.-% ergänzt.

## Claims

1. A thermoplastic molding composition comprising components A, B, C and D, and also, where appropriate, E, F, G and H, the entirety of which gives 100% by weight:
A) from 1 to 97.5% by weight of at least one aromatic polycarbonate A,
B) from 1 to 97.5% by weight of at least one graft polymer B made from
b1) from 40 to 80% by weight of a graft base made from an elastomeric polymer B1 based on alkyl acrylates having from 1 to 8 carbon atoms in the alkyl radical, on ethylene-propylene, on dienes, or on siloxanes, and having a glass transition temperature below 0°C,
b2) from 20 to 60% by weight of a graft B2 made from
b21) from 60 to 95% by weight of styrene or of substituted styrenes B21 of the formula I 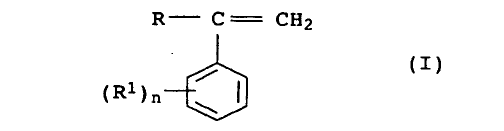 where R is C₁₋₈-alkyl or hydrogen and R¹ is C₁₋₈-alkyl and n is 1, 2 or 3, or a mixture of these, and
b22) from 5 to 40% by weight of at least one unsaturated nitrile B22,
C) from 1 to 97.5% by weight of at least one thermoplastic copolymer C made from
c1) from 60 to 85% by weight of styrene or of substituted styrenes C1 of the formula I, or a mixture of these compounds, and
c2) from 15 to 40% by weight of at least one unsaturated nitrile C2,
D) from 0.5 to 50% by weight of at least one copolymer D, obtainable via reaction of
d1) from 5 to 95% by weight of at least one thermoplastic methacrylate polymer D1 containing at least one type of functional groups selected from epoxy, carboxy, hydroxy, anhydride and oxazoline, with
d2) from 5 to 95% by weight of at least one thermoplastic polyester D2,
E) from 0 to 40% by weight of at least one filler E,
F) from 0 to 2% by weight of at least one organic acid F,
G) from 0 to 25% by weight of at least one halogen-free phosphorus compound G,
H) from 0 to 45% by weight of other additives H.

2. A molding composition as claimed in claim 1, where the polycarbonates A are based on biphenols of the formula II 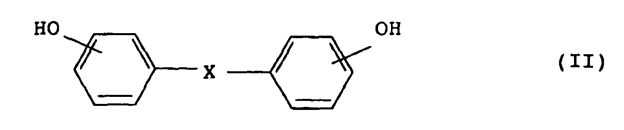 where X is a single bond, C₁₋₃-alkylene, C₂₋C₃₋alkylidene, C₃₋₆-cycloalkylidene, or else -S- or -SO₂-.

3. A molding composition as claimed in claims 1 and 2, where the graft base B1 of the graft copolymer B is composed of
b11) from 70 to 99.9% by weight of at least one alkyl acrylate B11 having from 1 to 8 carbon atoms in the alkyl radical,
b12) from 0 to 30% by weight of another copolymerizable monoethylenically unsaturated monomer B12, or a mixture of these,
b13) from 0.1 to 5% by weight of a copolymerizable, polyfunctional crosslinking monomer B13,
where the entirety of B11, B12 and B13 gives 100% by weight.

4. A molding composition as claimed in claims 1 to 3, where the copolymer C is composed of from 70 to 83% by weight of styrene and from 17 to 30% by weight of acrylonitrile.

5. A molding composition as claimed in claims 1 to 4, where the methacrylate polymer D1 is composed of
d11) from 80 to 99.9% by weight of methyl methacrylate D11,
d12) from 0 to 19.9% by weight of at least one other acrylate or methacrylate D12, and
d13) from 0.1 to 10% by weight of at least one monomer D13, containing at least one type of functional groups selected from epoxy, carboxy, hydroxy, anhydride and oxazoline,
where the entirety of D11, D12 and D13 gives 100% by weight.

6. A molding composition as claimed in claims 1 to 5, where the monomer D13 used comprises glycidyl methacrylate, allyl glycidyl ether, isopropenyl glycidyl ether, or a mixture of these.

7. A molding composition as claimed in claims 1 to 6, where the copolymer D is obtainable via melt compounding of the methacrylate polymers D1 with the polyester D2.

8. A molding composition as claimed in claims 1 to 7, where the filler D has been selected from the group consisting of particulate mineral fillers, fibrous fillers, and mixtures of these.

9. A process for preparing molding compositions as claimed in claims 1 to 7 by mixing the dry components A to D and, where appropriate, E to H at from 200 to 320°C.

10. The use of molding compositions as claimed in claims 1 to 7 for producing moldings, fibers and films.

11. The use as claimed in claim 10 for producing bodywork parts.

12. A moulding, fiber or film composed of a molding composition as claimed in claims 1 to 8.

13. A molding as claimed in claim 12 in the form of a bodywork part.

14. The use of copolymers D as defined in claim 1 as compatibilizers in molding compositions in which polycarbonates, graft polymers, and styrene copolymers are present.

15. A copolymer D, obtainable via reaction of
d1) from 5 to 95% by weight of at least one thermoplastic methacrylate polymer D1 composed of
d11) from 80 to 99.9% by weight, preferably from 85 to 99.3% by weight, and in particular from 90 to 98.9% by weight, of MMA (component D11),
d12) from 0 to 19.9% by weight, preferably from 0.5 to 14.8% by weight, and in particular from 0.6 to 9.5% by weight, of at least one other acrylate or methacrylate D12, and
d13) from 0.1 to 20% by weight, preferably from 0.2 to 15% by weight, and in particular from 0.5 to 10% by weight, of at least one monomer D13 containing at least one type of functional groups selected from epoxy, carboxy, hydroxy, anhydride, and oxazoline,
where the entirety of d11), d12), and d13) gives 100% by weight, with
d2) from 5 to 95% by weight of at least one thermoplastic polyester D2, selected from polyethylene terephthalate and polybutylene terephthalate, or a mixture of these, where the entirety of d1) and d2) gives a total of 100% by weight.

## Revendications

1. Masses de moulage thermoplastiques, contenant les composants A, B, C et D ainsi qu'éventuellement E, F, G et H, dont la somme donne 100% en poids,
A) 1 à 97,5% en poids d'au moins un polycarbonate aromatique A,
B) 1 à 97,5% en poids d'au moins un polymère de greffage B à base
b1) de 40 à 80% en poids d'une base de greffage en un polymère élastique comme du caoutchouc B1 à base d'acrylates d'alkyle comportant 1 à 8 atomes de C dans le radical alkyle, d'éthylène/propylène, de diènes ou de siloxanes et présentant une température de transition vitreuse inférieure à 0°C,
b2) de 20 à 60% en poids d'une couche de greffage B2 à base
b21) de 60 à 95% en poids de styrène ou de styrènes substitués B21 de la formule générale I : 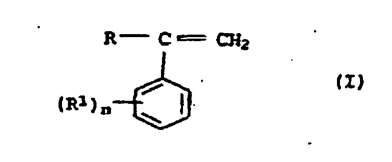
dans laquelle R représente un radical alkyle en C₁-C₈ ou de l'hydrogène et R¹ un radical alkyle en C₁-C₈ et n a la valeur de 1, 2 ou 3, ou de leurs mélanges, et
b22) de 5 à 40% en poids d'au moins un nitrile insaturé B22,
C) 1 à 97,5% en poids d'au moins un copolymère thermoplastique C à base
c1) de 60 à 85% en poids de styrène ou de styrènes substitués C1 de la formule générale I ou de leurs mélanges, et
c2) de 15 à 40% en poids d'au moins un nitrile insaturé C2,
D) 0,5 à 50% en poids d'au moins un copolymère D, que l'on peut obtenir par réaction
d1) de 5 à 95% en poids d'au moins un polymère méthacrylique thermoplastique D1 contenant au moins un type de groupes fonctionnels choisis parmi les groupes époxy, carboxyle, hydroxyle, anhydride et oxazoline, avec
d2) 5 à 95% en poids d'au moins un polyester thermoplastique D2,
E) 0 à 40% en poids d'au moins une matière de remplissage E,
F) 0 à 2% en poids d'au moins un acide organique F,
G) 0 à 25% en poids d'au moins un composé de phosphore exempt d'halogène G,
H) 0 à 45% en poids d'autres additifs H.

2. Masses de moulage suivant la revendication 1, dans lesquelles les polycarbonates A sont basés sur des diphénols de la formule générale II : 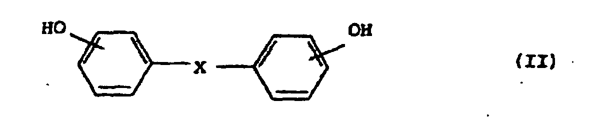 dans laquelle X est une simple liaison ou un groupe alkylène en C₁-C₃, alkylidène en C₂-C₃, cycloalkylidène en C₃-C₆, ainsi que -S- ou -SO₂-.

3. Masses de moulage suivant les revendications 1 et 2, dans lesquelles la base de greffage B1 du copolymère de greffage B est constituée
b11) de 70 à 99,9% en poids d'au moins un acrylate d'alkyle B11 comportant 1 à 8 atomes de C dans le radical alkyle,
b12) de 0 à 30% en poids d'un autre monomère copolymérisable monoéthyléniquement insaturé B12 ou de leurs mélanges, et
b13) de 0,1 à 5% en poids d'un monomère copolymérisable, polyfonctionnel, produisant la réticulation B13,
la somme de B11, B12 et B13 donnant 100% en poids.

4. Masses de moulage suivant les revendications 1 à 3, dans lesquelles le copolymère C est constitué de 70 à 83% en poids de styrène et de 17 à 30% en poids d'acrylonitrile.

5. Masses de moulage suivant les revendications 1 à 4, dans lesquelles le polymère méthacrylique D1 est constitué
d11) de 80 à 99,9% en poids de méthacrylate de méthyle D11,
d12) de 0 à 19,9% en poids d'au moins un autre acrylate ou méthacrylate D12, et
d13) de 0,1 à 10% en poids d'au moins un monomère D13, contenant au moins un type des groupes fonctionnels choisis parmi les groupes époxy, carboxyle, hydroxyle, anhydride et oxazoline, la somme de D11, D12 et D13 donnant 100% en poids.

6. Masses de moulage suivant les revendications 1 à 5, dans lesquelles on utilise, comme monomère D13, du méthacrylate de glycidyle, de l'éther allylglycidylique, de l'éther isopropénylglycidylique ou leurs mélanges.

7. Masses de moulage suivant les revendications 1 à 6, dans lesquelles le copolymère D peut être obtenu par compoundage à l'état fondu du polymère méthacrylique D1 avec le polyester D2.

8. Masses de moulage suivant les revendications 1 à 7, dans lesquelles la matière de remplissage D est choisie parmi des matières de remplissage minérales particulaires, des matières de remplissage fibreuses ou leurs mélanges.

9. Procédé de préparation de masses de moulage suivant les revendications 1 à 7, par mélange des composants secs A à D et éventuellement E à H à 200 jusqu'à 320°C.

10. Utilisation de masses de moulage suivant les revendications 1 à 7, pour la préparation de corps façonnés, de fibres et de feuilles.

11. Utilisation suivant la revendication 10 pour la préparation de pièces de carrosserie.

12. Corps façonnés, fibres et feuilles à base d'une masse de moulage suivant les revendications 1 à 8.

13. Corps façonnés suivant la revendication 12, sous la forme de pièces de carrosserie.

14. Utilisation de copolymères D, tels que définis dans la revendication 1, comme intermédiaire de compatibilité dans des masses de moulage contenant des polycarbonates, des polymères de greffage et des copolymères de styrène.

15. Copolymères D que l'on peut obtenir par réaction
d1) de 5 à 95% en poids d'au moins un polymère méthacrylique thermoplastique D1, constitué
d11) de 80 à 99,9, de préférence de 85 à 99,3, et en particulier de 90 à 98,9, % en poids de MMA (composant D11),
d12) de 0 à 19,9, de préférence de 0,5 à 14,8, et en particulier de 0,6 à 9,5, % en poids d'au moins un autre acrylate ou méthacrylate D12, et
d13) de 0,1 à 20, de préférence de 0,2 à 15, et en particulier de 0,5 à 10, % en poids d'au moins un monomère D13 contenant au moins un type de groupes fonctionnels choisis parmi les groupes époxy, carboxyle, hydroxyle, anhydride et oxazoline,
la somme de d11), d12) et d13) donnant 100% en poids,
avec
d2) 5 à 95% en poids d'au moins un polyester thermoplastique D2, choisi parmi du téréphtalate de polyéthylène et du téréphtalate de polybutylène ou leurs mélanges,
la somme de d1) et d2) se complétant à 100% en poids.
